# EUROPEAN PATENT APPLICATION

(11) **EP 1 719 994 A1**
(43) Date of publication of application: **08.11.2006**
(21) Application number: 05710167.7
(22) Date of filing: 14.02.2005
(51) Int. Cl.: G01L 9/12

(54) **CAPACITIVE SENSOR**

(30) Priority: 13.02.2004 JP 2004037334
(71) Applicant: TOKYO ELECTRON LIMITED, Minato-ku, Tokyo 107-8481 (JP)
(72) Inventor: HOSHINO, Tomohisa, c/o Tokyo Electron At Limited, Amagasaki-city, Hyogo 6600891 (JP)
(74) Representative: Liesegang, Eva
(86) International application number: PCT/JP2005/002165
(87) International publication number: WO 2005/078404

(57) **Abstract**

In a capacity type sensor including a guard electrode which is disposed between a first electrode and a second electrode, an alternating current potential difference between the first electrode and the guard electrode is made substantially close to zero by a potential equalizing means, and impedance change between the first electrode and the second electrode is detected by a capacity type sensor detecting means, parasitic capacity does not function as capacitor, and the effect of the parasitic capacity to detected capacity can be cancelled in appearance, by making the potential difference at both ends of the parasitic capacity which arises between the first electrode and the guard electrode, smaller in appearance or substantially zero, resultantly, only amount of capacity change can be detected.

## Description

### TECHNICAL FIELD

The present invention relates to a capacity type sensor, and more particularly, to a capacity type sensor which detect change of electrostatic capacity such as a pressure sensor.

### BACKGROUND ART

In a capacity type sensor, typically, a first electrode and a second electrode are disposed opposedly on a substrate, and they are fixed and supported on the substrate through an insulating material such as a spacer or a fixing member. Moreover, outside connecting pads are formed on the first and the second electrodes in order to connect the first electrode to an input terminal of a detecting circuit and to connect.the second electrode to a bias voltage source.

The capacity type pressure sensor of this kind detects change of pressure by detecting electrostatic capacity change between the first electrode and the second electrode utilizing the detecting circuit.

In the above described capacity type sensor, the first and the second electrodes act as operating portions which operate to detect in response to physical values to be detected. The spacer and the fixing member act as fixing portions and capacity due to the fixing portions becomes parasitic capacity to be one portion of standard capacity of the sensor. The parasitic capacity does not only contribute to detection of the physical value but also leads to degradation of the sensitivity or aggravation of input conversion noise level.

On the other hand, one example of a capacity type sensor is disclosed in Japanese Unexamined Patent Publication 2000-028462. In the capacity type sensor described in the Patent Publication, a guard electrode is provided on a semiconductor substrate, and a fixed electrode is formed on the guard electrode through an insulating layer. Then, two layers of diaphragms are formed on the insulating layer through a cavity, and a movable electrode is formed between the respective layers of the diaphragms to detect electrostatic capacity between the movable electrode and the fixed electrode. At this point, the arrangement disclosed in the Patent Publication prevents interfusion of outside noise by making potential of the guard electrode equal to that of the fixed electrode utilizing an operational amplifier.

In the capacity type sensor described in the above Unexamined Patent Publication 2000-028462, though the guard electrode is provided in order not to be affected by outside noise, the arrangement disclosed in the Patent Publication cannot prevent aggravation of the input conversion noise level by utilizing the guard electrode.

### DISCLOSURE OF THE INVENTION

It is an object of the present invention to provide a capacity type sensor by which the sensitivity can be improved and at the same time the input conversion noise level can be reduced.

A capacity type sensor in accordance with one aspect of the present invention includes: a first electrode; a second electrode which is disposed opposedly to the first electrode; a guard electrode which is disposed opposedly to the first electrode; a potential equalizer to make the potential difference between the first electrode and the guard electrode close to zero; and a capacity type sensor detector to detect impedance change between the first electrode and the second electrode.

In the capacity type sensor according to the present invention, preferably the guard electrode is disposed between the first electrode and the second electrode.

The capacity type sensor according to the present invention, preferably further includes a first supporting member to fix the guard electrode and the first electrode.

The capacity type sensor according to the present invention, preferably further includes a second supporting member to fix the second electrode and the guard electrode.

The capacity type sensor according to the present invention, preferably further includes a substrate on which either one of the first electrode or the second electrode, and the guard electrode are formed, and the guard electrode is formed out of a semiconductor layer which has a different conductivity type from the first electrode or the second electrode.

In the capacity type sensor according to the present invention, the first electrode or the second electrode includes a thin film portion which is constituted by a depression at the central part of lower side of the first or second electrode, and the thin film portion is a vibrating electrode.

In the capacity type sensor according to the present invention, preferably the first electrode or the second electrode which is formed as the thin film portion is a vibrating electrode.

In the capacity type sensor according to the present invention, preferably at least one of the first electrode and the second electrode is a vibrating electrode.

In the capacity type sensor according to the present invention, preferably both of the first electrode and the second electrode are fixed electrodes.

A capacity type sensor in accordance with another aspect of the present invention includes: a first electrode and a second electrode which are opposedly disposed each other and an area of either one of the first electrode and the second electrode is made narrower than another; and a supporting member which is disposed outside of outer periphery of one of the electrodes with a narrower area to support another one of the electrodes with a wider area.

The capacity type sensor according to the present invention, preferably further includes a substrate, and the supporting member supports the electrode with the wider area on the substrate.

In the capacity type sensor according to the present invention, preferably either one of the first and the second electrode is disposed on the substrate, and a third supporting member is disposed between the substrate and another one of the electrode which is not disposed on the substrate.

In the capacity type sensor according to the present invention, preferably an opening portion is formed at the central part of the substrate, and the electrode formed on the third supporting member is a vibrating electrode.

In the capacity type sensor according to the present invention, preferably either one of the first and the second electrode is disposed on another one of electrode and a forth supporting member is included between the both electrodes.

The capacity type sensor according to the present invention, preferably further includes a fifth supporting member which is formed on the electrode with a wider area, and an insulating member which is supported by the fifth supporting member, and the electrode with a narrower area is formed on the insulating member.

The capacity type sensor according to the present invention, preferably further includes: a guard electrode which is disposed between the fifth supporting member and the insulating member; a potential equalizer to make the potential difference between the first electrode and the guard electrode close to zero; and a capacity type sensor detector to detect impedance change between the first electrode and the second electrode.

In a capacity type sensor according to the first aspect of the present invention, because a guard electrode is disposed between a first electrode and a second electrode, the potential difference between the first electrode and the guard electrode is made substantially close to zero by a potential equalizer, and impedance change between the first electrode and the second electrode is detected by a capacity type sensor detector, the parasitic capacity does not function as a capacitor, and effect of the parasitic capacity to detected capacity can be cancelled in appearance, by making the potential difference at both ends of the parasitic capacity which arises between the first electrode and the guard electrode, smaller in appearance or substantially zero, resultantly, only amount of capacity change can be detected. By this arrangement, the sensitivity can be improved and at the same time the input conversion noise level can be reduced.

A capacity type sensor in accordance with another aspect of the present invention includes: a first electrode and a second electrode which are opposedly disposed each other and an area of either one of the first and the second electrode is made narrower than another; and a supporting member which is disposed outside of outer periphery of one of the electrode with a narrower area to support another one of the electrode with a wider area. By this arrangement, the parasitic capacity caused by the supporting member does not affect on the detected capacity at either one of the first or the second electrode. The parasitic capacity can be reduced as described above, the sensitivity can be improved and at the same time the input conversion noise level can be reduced.

### BRIEF DESCRIPTION OF DRAWINGS

Fig. 1 are diagrams to show a capacity type sensor according to a first embodiment of the present invention;
Fig. 2 are plan views to show relevant parts of the capacity type sensor shown in Fig. 1;
Fig. 3 is a diagram to show one example of connection of the capacity type sensor shown in Fig. 1;
Fig. 4 is a diagram to explain an operation by which the effect of the parasitic capacity is cancelled in appearance;
Fig. 5 is a diagram to show another example of connection of the capacity type sensor shown in Fig. 1;
Fig. 6 is a diagram to show other example of connection of the capacity type sensor shown in Fig. 1;
Fig. 7 are diagrams to show a capacity type sensor according to a second embodiment of the present invention;
Fig. 8 are diagrams to show a capacity type sensor according to a third embodiment of the present invention;
Fig. 9 is a cross sectional view to show a capacity type sensor according to a fourth embodiment of the present invention;
Fig. 10 is a cross sectional view to show a capacity type sensor according to a fifth embodiment of the present invention;
Fig. 11 are plan views and a cross sectional view to show relevant parts which constitute the capacity type sensor according to a sixth embodiment of the present invention;
Fig. 12 are plan views and a cross sectional view to show relevant parts which constitute the capacity type sensor according to a seventh embodiment of the present invention;
Fig. 13 are plan views and a cross sectional view to show relevant parts which constitute the capacity type sensor according to an eighth embodiment of the present invention;
Fig. 14 are plan views and cross sectional view to show relevant parts which constitute the capacity type sensor according to a ninth embodiment of the present invention;
Fig. 15 are plan views and cross sectional view to show relevant parts which constitute the capacity type sensor according to a tenth embodiment of the present invention; and
Fig. 16 are plan views and a cross sectional view to show relevant parts which constitute the capacity type sensor according to an eleventh embodiment of the present invention.

### BEST MODE FOR CARRYING OUT THE INVENTION

Hereinafter, the embodiments of the present invention will be described with reference to the accompanying drawings.

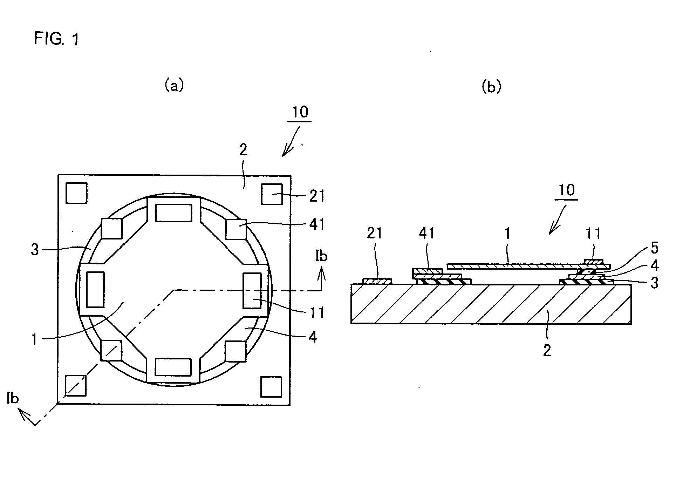

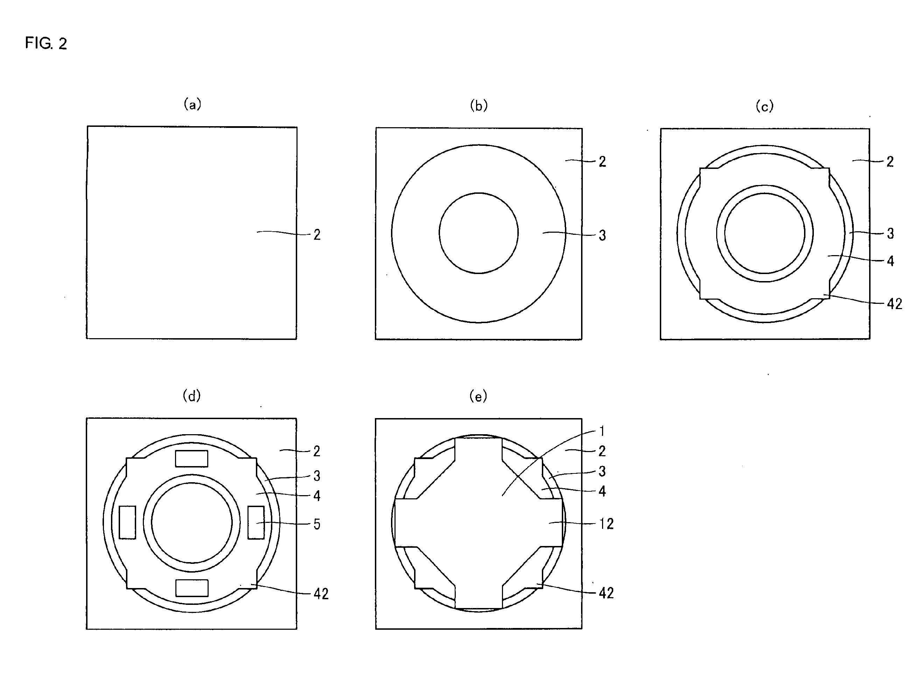

Fig. 1 (a) and Fig. 1 (b) are diagrams to show a capacity type sensor according to the first embodiment of the present invention, particularly, Fig. 1 (a) shows a plan view and Fig. 1 (b) shows a cross sectional view when cut along a line Ib - Ib shown in Fig. 1 (a). Fig. 2 (a) to Fig. 2 (e) are plan views to show relevant parts of the capacity type sensor shown in Fig. 1.

As shown in Fig. 1 (b), in the capacity type sensor 10 a first electrode 1 and a second electrode 2 are disposed opposedly. The second electrode 2 which is a substrate, is formed out of, for example, substantially square single crystal silicon substrate as shown in Fig. 2 (a). On the second electrode 2, a ring shaped insulating material 3 is formed as a second supporting member which is made out of, for example, silicon oxide film as shown in Fig. 2 (b). The insulating material 3 functions as a spacer or a fixing member which supports a guard electrode 4 on the second electrode 2.

The guard electrode 4 is formed out of, for example, polycrystalline silicon film on the insulating material 3 in the ring shape as shown in Fig. 2 (c). The guard electrode 4 is provided in order to cancel effect of the parasitic capacity on detected capacity which causes degradation of the sensitivity and aggravation of the input conversion noise level in appearance by making itself substantially equal potential to the first electrode, and as a result, to improve the sensitivity and to reduce the input conversion noise level at the same time.

Insulating materials 5 as a first supporting member with a rectangular shape in cross section, are formed along each edge of the second electrode 2 and made, for example, out of silicon oxide film on the guard electrode 4 as shown in Fig. 2 (d). The insulating material 5 functions as a spacer or an anchor to support the first electrode 1. The first electrode 1 is formed out of, for example, polycrystalline silicon film on the insulating material 5 as shown in Fig. 2 (e). The first electrode 1 is formed in a rhombic shape and functions as a vibrating electrode, and in each corner of the electrode a rectangular extended portion 12 is formed along each edge of the second electrode 2 to form first electrode pads 11 on the electrode. At this point the second electrode 2 functions as a fixed electrode.

As shown in Fig. 1 (a), four first electrode pads 11 are formed on the extended portion 12 of the first electrode 1, four second electrode pads 21 are formed on each corner of the second electrode 2, and four guard electrode pads 41 are formed on a triangular extended portion 42 of the guard electrode 4.

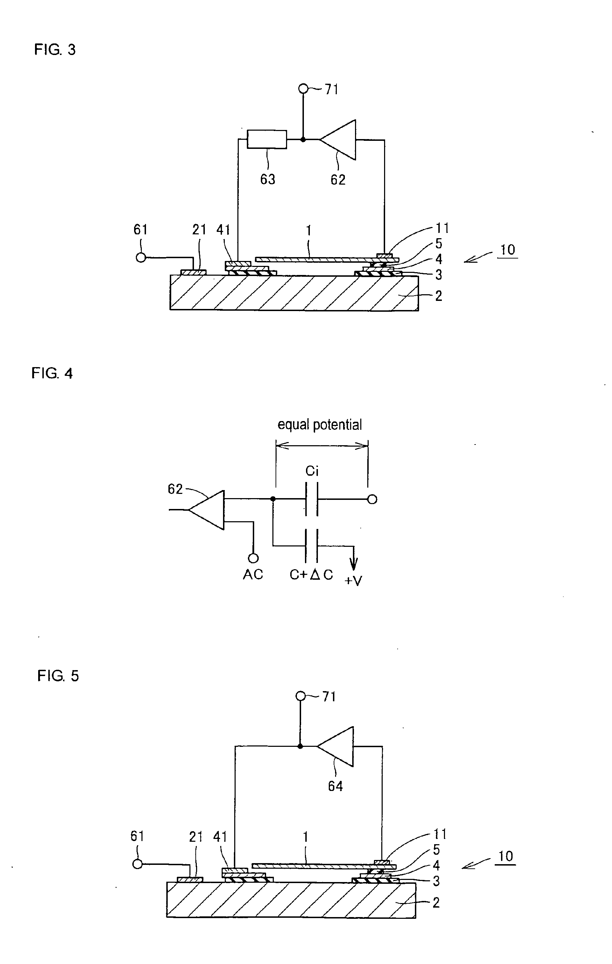

Fig. 3 is a diagram to show one example of a connection of the capacity type sensor 10 shown in Fig. 1 and Fig. 4 is a diagram to explain an operation by which the effect of the parasitic capacity is cancelled in appearance.

The second electrode pad 21 of the capacity type sensor 10 shown in Fig. 1 is connected to a terminal 61 and a bias voltage +V is supplied to the terminal 61 from a bias voltage source which is not shown in the diagram. To the first electrode pad 11, an input of a capacity type sensor detecting circuit 62 is connected, and an output of the capacity type sensor detecting circuit 62 is connected to an output terminal 71 and as well as to input of a gain circuit 63. Output of the gain circuit 63 is connected to the guard electrode pad 41.

The capacity type sensor detecting circuit 62 is provided to detect impedance change between the first electrode 1 and the second electrode 2 of capacity type sensor 10, and the circuit is constituted by, for example, an operational amplifier having gain of A. On the other hand, the gain circuit 63 has, for example, gain of +1/A. As a result, when output of the capacity type sensor detecting circuit 62 is given to the gain circuit 63, because total gain becomes A * (+1/A) = 1, the potential difference between both ends of the parasitic capacity can be in appearance made smaller than the potential difference between the first electrode and the second electrode, or can be made substantially close to zero by making alternating current potential of the first electrode 1 and the guard electrode 4 equivalent to almost the same.

At this point additional explanation will be given. Because this sensor 10 is a capacity type, it is apparent that direct current voltage potential difference may arise between the first electrode 1 and the guard electrode 4. In Fig. 3, a potential equalizing means and a capacity type sensor detecting means are constituted by the capacity type sensor detecting circuit 62 and the gain circuit 63.

One of an input of the capacity type sensor detecting circuit 62 can be described as a signal gained by a parallel connection of the parasitic capacity Ci which is generated between the first electrode 1 and the guard electrode 4 and sum of capacity C and capacity change ΔC which are generated between the first electrode 1 and the second electrode 2, as shown in Fig. 4. When the potential difference arises between both ends of the parasitic capacity Ci, because the parasitic capacity Ci functions as a capacitor, the sensitivity of the capacity type sensor detecting circuit 62 becomes degraded and at the same time the input conversion noise level of the circuit 62 becomes aggravated by the parasitic capacity Ci.

On the contrary in this embodiment, effect to the detected capacity can be cancelled in appearance because the parasitic capacity Ci does not function as a capacitor and the potential difference between both ends of the parasitic capacity Ci is made in appearance smaller than the potential difference between the first electrode and the second electrode, or is made almost zero. By this arrangement, because only amount of capacity change ΔC of the capacity type sensor 10 is detected by the capacity type sensor detecting circuit 62, the sensor can improve the sensitivity and reduce the input conversion noise level at the same time.

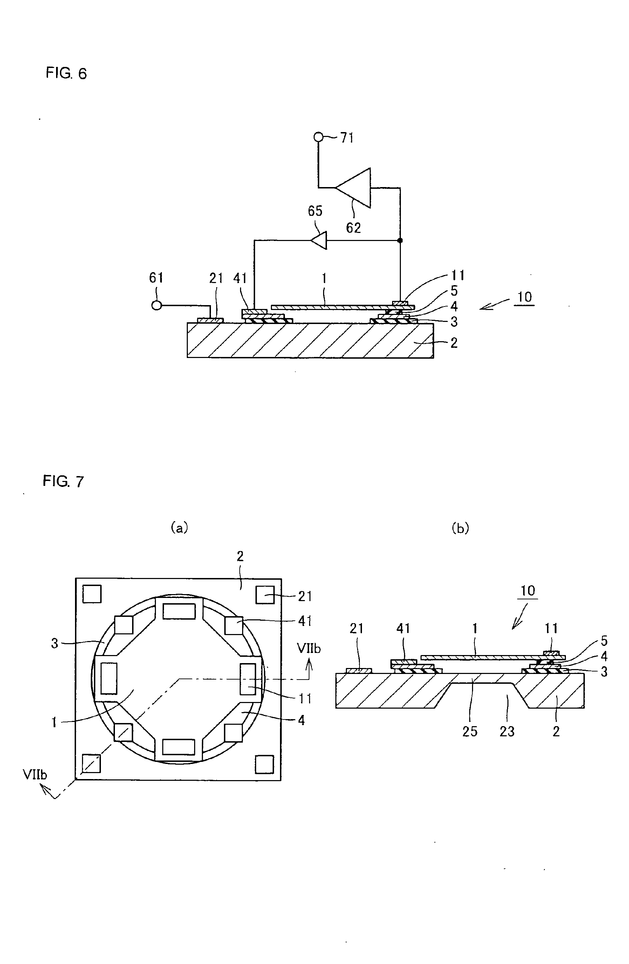

Fig. 5 is a diagram to show another example of a connection of the capacity type sensor shown in Fig. 1. The example shown in Fig. 5 is constituted by a voltage follower circuit in which one input of the operational amplifier and an output of the operational amplifier are connected together as the capacity type sensor detecting circuit 64 constituting the potential equalizing means and the capacity type sensor detecting means. Because a voltage follower circuit has gain of 1, the first electrode 1 and the guard electrode 4 can be made to have substantially equal alternating current potential equivalently. As a result of this, because the effect of the parasitic capacity Ci to the detected capacity is cancelled in appearance and only amount of capacity change ΔC is detected by the capacity type sensor 10, the sensor can improve the sensitivity and at the same time can reduce the input conversion noise level.

Fig. 6 is a diagram to show still another example of a connection of the capacity type sensor shown in Fig. 1. The example shown in Fig. 6 is constituted by connecting the capacity type sensor detecting circuit 62 between the first electrode pad 11 and the output terminal 71 as shown in Fig. 3, and at the same time, by connecting an analog buffer 65 between the first electrode pad 11 and the guard electrode pad 41.

Because the analog buffer 65 has gain of 1, the buffer constitutes the potential equalizing means to make the first electrode 1 and the guard electrode 4 have substantially equal alternating current potential as shown in Fig. 3. As a result of this, because the effect of the parasitic capacity Ci to the detected capacity is cancelled in appearance, the sensor can improve the sensitivity and at the same time can reduce the input conversion noise level. The capacity type sensor detecting circuit 62 is provided to detect change of impedance between the first electrode 1 and the second electrode 2.

At this point, it is required that the potential difference between the first electrode 1 and the guard electrode 4 is smaller than the potential difference of the alternating current voltage between the first electrode 1 and the second electrode 2. Also, even when the levels of the alternating current voltages which arise at the first electrode 1 and the guard electrode 4 are different in some degree, it is required that respective phases of them are substantially equal. In this context, the term "substantially equal potential" also includes a concept that phases of them are substantially the same.

Fig. 7 (a) and Fig. 7 (b) are diagrams to show a capacity type sensor according to a second embodiment of the present invention, Fig. 7 (a) is a plan view and Fig. 7 (b) is cross sectional view when cut along the line VIIb - VIIb shown in Fig. 7 (a).

In this second embodiment, the sensor is constituted by forming a depression 23 having a trapezoidal shape in order to make a thin film portion 25 which has a thinner portion opposed to the first electrode 1 at lower side of the second electrode 2 that is the substrate of the capacity type sensor 10 shown in Fig. 1. In the first embodiment shown in Fig. 1 the first electrode 1 functions as the vibrating electrode, on the contrary in the second embodiment shown in Fig. 7, a thin film portion 25 of the second electrode 2 functions as the vibrating electrode and the first electrode 1 functions as the fixed electrode. The structure other than described above, is the same as the sensor shown in Fig. 1. By utilizing the electrical connections shown in Fig. 3 to Fig. 6, the sensitivity of the sensor can be improved and the input conversion noise level can be reduced as well. At this point the depression 23 may be a rectangular shape.

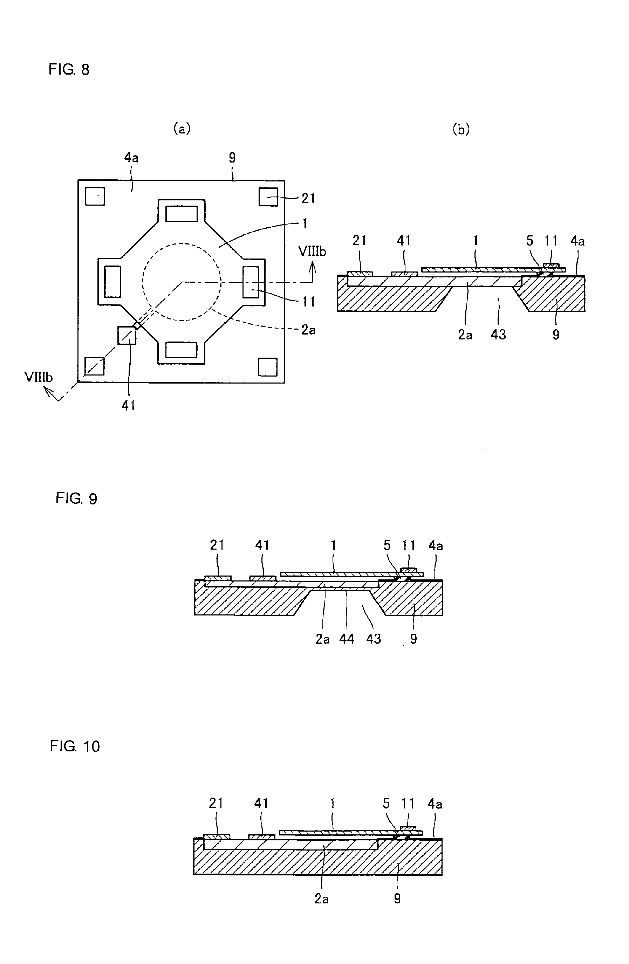

Fig. 8 (a) and Fig. 8 (b) are diagrams to show a capacity type sensor according to a third embodiment of the present invention, especially Fig. 8 (a) is a plan view and Fig. 8 (b) is a cross sectional view when cut along the line VIIIb - VIIIb shown in Fig. 8 (a).

In the first embodiment shown in Fig. 1 the guard electrode 4 is formed through the insulating material 3 on the second electrode 2 which is the substrate. On the contrary in this third embodiment the second electrode 2a is formed of a semiconductor diffusion layer with different conductivity type such as p type / n type by the ion implantation method or the diffusion method on the substrate 9 which has comparatively large thickness, and the guard electrode 4a is formed opposedly to the first electrode 1 around the second electrode 2a. The second electrode 2a is formed in a circular plate shape with a smaller diameter than the first electrode 1, further, belt like extended portions are formed from parts of the circular plate shown in Fig. 8 by straight dotted line and the second electrode pads 21 are formed on tip parts of it. As for the guard electrode 4a, also a guard electrode pad 41 is formed. At lower side of the substrate 9, a depression 43 with a trapezoidal shape is formed so as to expose lower side of the second electrode 2a. At this point it is preferable that the guard electrode 4a is set to be reversed bias depending on the semiconductor conductivity type.

In this third embodiment, the second electrode 2a functions as the vibrating electrode and the first electrode 1 functions as the fixed electrode. The structure of the first electrode 1, the insulating material 5 and the like other than described above, is the same as the sensor shown in Fig. 1. In this third embodiment, because the second electrode 2a and the guard electrode 4a are formed out of semiconductor diffusion layers with the different conductivity type, it is possible to dispense with the insulating material between them, and results in advantage that no parasitic capacity arises at this portion.

Fig. 9 is a cross sectional view to show a capacity type sensor according to a fourth embodiment of the present invention. In this forth embodiment the depression 43 is formed at the substrate 9 so as to form a thin film portion 44 at opposed part to the first electrode 1. The structure other than described above is quite the same as that of the sensor shown in Fig. 8.

Fig. 10 is a cross sectional view to show a capacity type sensor according to a fifth embodiment of the present invention. In this embodiment the second electrode 2a and the guard electrode 4a are formed by the ion implantation method or the diffusion method on the substrate 9 the same as the embodiment shown in Fig. 8. However, the depression 43 in Fig. 8 is not formed at the substrate 9 and the structure other than described above, is the same as the sensor shown in Fig. 1. As a result, in this fifth embodiment the first electrode 1 functions as the vibrating electrode and the second electrode 2a functions as the fixed electrode.

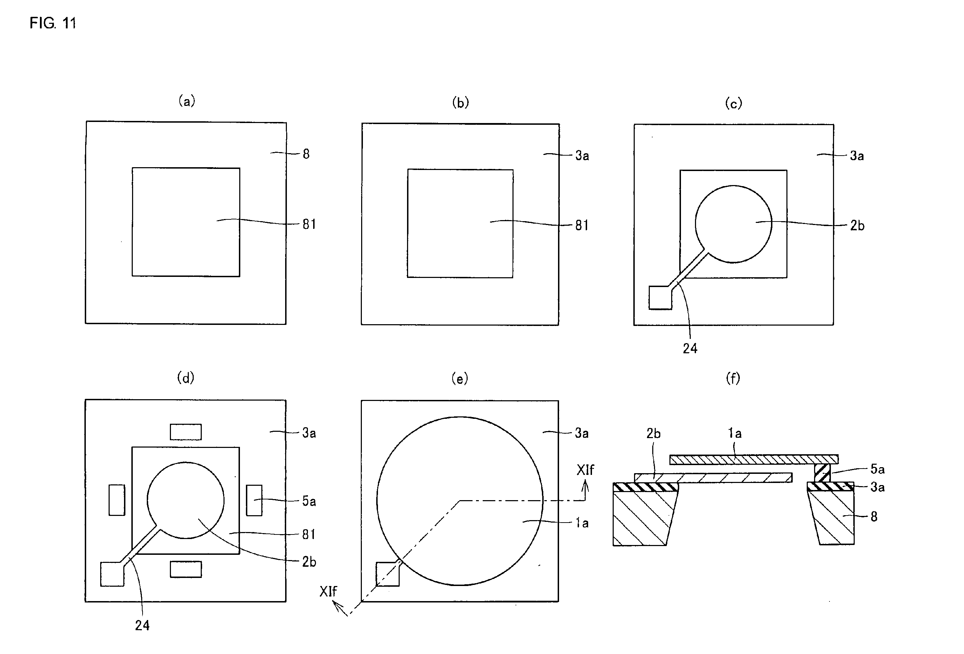

In the respective embodiments shown in Fig. 1 to Fig. 10 described above, the guard electrodes 4, 4a are configured to reduce the parasitic capacity by making the first electrode 1, 1a and the guard electrode 4, 4a have substantially equal potential. In the respective embodiments shown in Fig. 11 to Fig. 16 described below, the parasitic capacity is reduced without providing the guard electrode 4, 4a. In other words, the effect of the parasitic capacity caused by the insulating member is reduced by making either one of area of the first electrode and the second electrode which are disposed opposedly with each other, narrower than that of another, and providing an insulating member outside of outer periphery of the electrode with narrower area.

Fig. 11 (a) to Fig. 11 (e) are plan views to show relevant parts which constitute the capacity type sensor according to a sixth embodiment of the present invention and Fig. 11 (f) is a cross sectional view of the capacity type sensor when cut along the line XIf - XIf shown in Fig. 11 (e).

A substrate 8 shown in Fig. 11 (a) is formed out of single crystal silicon substrate which is, for example, substantially square and has comparatively large thickness, and a rectangular opening portion 81 is formed at the central part of the substrate. An insulating material 3a is made out of, for example, silicon oxide film on the whole substrate 8 other than the opening portion 81 as shown in Fig. 11 (b). As shown in Fig. 11 (c), a second electrode 2b with a circular shape is formed out of, for example, single crystal silicon so as to have smaller diameter than that of the opening portion 81. From one part of the second electrode an extended portion 24 is formed so as to extend on the insulating material 3a, and the second electrode pad, not shown in the drawing, is formed on a tip part of the extended portion. The first electrode 1a functions as the fixed electrode and the second electrode 2b functions as the vibrating electrode.

Further, four insulating materials 5a as the supporting members with comparatively large thickness, are formed out of silicon oxide film, along each edge of the substrate 8 outside of outer periphery of the second electrode 2b on the insulating material 3a as shown in Fig. 11 (d). These insulating materials 5a function as fixing members to fix the first electrode 1a. Moreover, as shown in Fig. 11 (e), the first electrode 1a is made out of polycrystalline silicon film so as to be held by the insulating material 5a. The first electrode 1a has a larger diameter than the second electrode 2b in order to cover four insulating materials 5a.

In this embodiment, as is apparent by the cross sectional view shown in Fig. 11 (f), an area of the second electrode 2b which is the vibrating electrode, is arranged to be smaller than that of the first electrode 1a, and the insulating materials 5a which are the fixing member, are located outside of outer periphery of the second electrode 2b, therefore the parasitic capacity caused by the insulating materials 5a do not affect on the detected capacity at the second electrode 2b. Further, distance between the substrate 8 and the first electrode 1a becomes longer by making the insulating materials 5a thicker, the parasitic capacity between them can be reduced, and as a result, the sensitivity can be improved and at the same time the input conversion noise level can be reduced.

At this point, the electrode pads are provided on the first electrode 1a and the second electrode 2b respectively, however in Fig. 11, they are omitted. Further, it is required that only one of each electrode pad is provided on them and the parasitic capacity can be more reduced when total pad area becomes less.

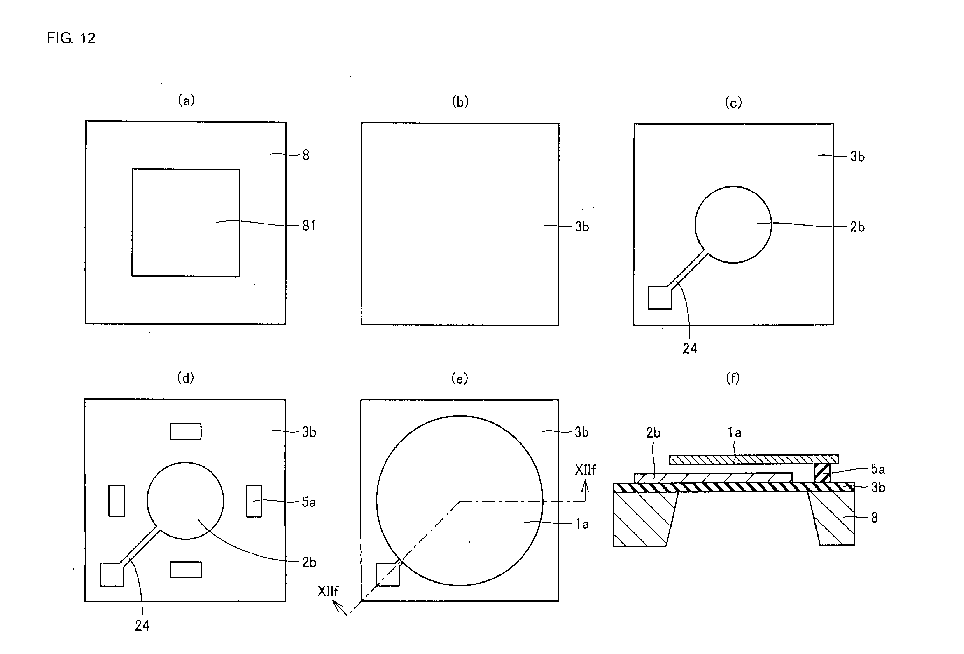

Fig. 12 (a) to Fig. 12 (e) are plan views to show relevant parts which constitute the capacity type sensor according to a seventh embodiment of the present invention and Fig. 12 (f) is a cross sectional view of the capacity type sensor when cut along the line XIIf - XIIf shown in Fig. 12 (e).

In this seventh embodiment, an insulating material 3b which is shown in Fig. 12 (b), is formed so as to cover the opening portion 81 of the substrate 8 which is shown in Fig. 12 (a). Then the second electrode 2b which is shown in Fig. 12 (c), is formed on the insulating material 3b. The structure other than described above, is the same as the sensor in the sixth embodiment shown in Fig. 11. Even in this seventh embodiment, the insulating materials 5a are configured to be outside of outer periphery of the second electrode 2b as is apparent by the cross sectional view shown in Fig. 12 (f), and the parasitic capacity can be reduced while distance between the substrate 8 and the first electrode 1a becomes longer. By this arrangement, the sensitivity can be improved and at the same time the input conversion noise level can be reduced.

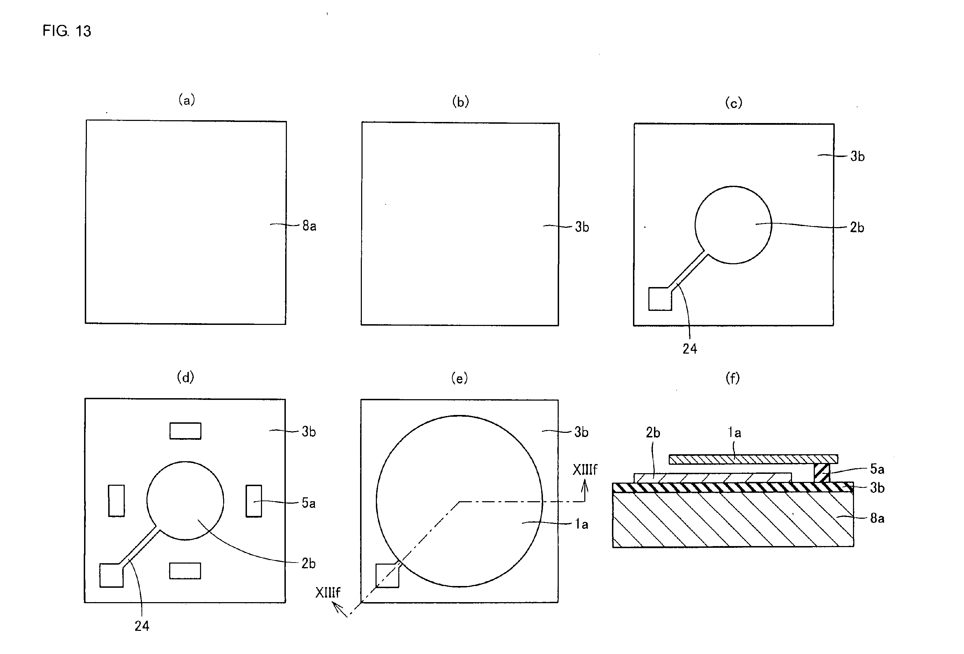

Fig. 13 (a) to Fig. 13 (e) are plan views to show relevant parts which constitute the capacity type sensor according to an eighth embodiment of the present invention and Fig. 13 (f) is a cross sectional view of the capacity type sensor when cut along the line XIIIf - XIIIf shown in Fig. 13 (e).

In this eighth embodiment, the opening portion 81 shown in Fig. 12 (a) is not formed at a substrate 8a as shown in Fig. 13 (a) and the structure other than described above is the same as the sensor shown in Fig. 12. In this embodiment, a second electrode 2b functions as the fixed electrode and the first electrode 1a functions as the vibrating electrode.

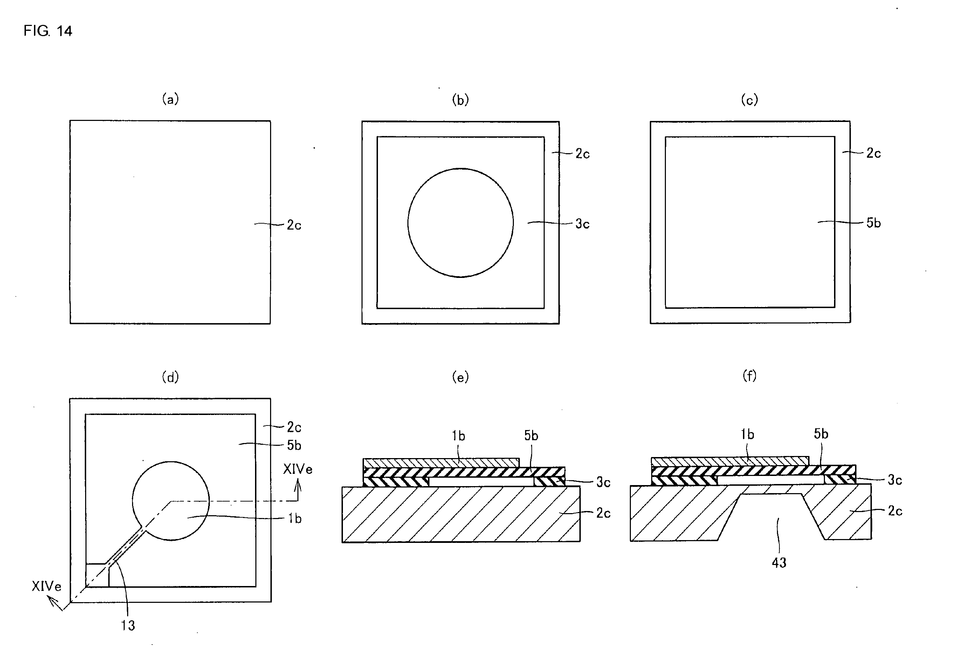

Fig. 14 (a) to Fig. 14 (d) are plan views to show relevant parts which constitute the capacity type sensor according to a ninth embodiment of the present invention and Fig. 14 (e) and Fig. 14 (f) are cross sectional views of the capacity type sensor when cut along the line XIVe - XIVe shown in Fig. 14 (d).

In this ninth embodiment, a second electrode 2c is formed by the substrate which has comparatively large thickness as shown in Fig. 14 (e), and an insulating material 3c is formed on the second electrode 2c except on the periphery and the circular shape portion at the center as shown in Fig. 14 (b). An insulating material 5b is formed on the insulating material 3c as shown in Fig. 14 (c), and a first electrode 1b is formed on the insulating material 5b in the same manner as the embodiments shown in Fig. 11 to Fig. 13. On the first electrode 1b, an extended portion 13 is formed so as to be connected to the first electrode pad which is not shown in the drawing. The insulating materials 3c and 5b constitute fourth supporting members.

In this embodiment, the insulating material 3c is formed so as to surround outside of the outer periphery of the first electrode 1b as is apparent by the cross sectional view shown in Fig. 14 (e), and the parasitic capacity on the insulating material 3c does not affect the detected capacity at the first electrode 1b. In this embodiment as shown in Fig. 14 (f), the depression 43 may be formed at lower side of the second electrode 2c so as to make the first electrode 1b function as the fixed electrode and the second electrode 2c as the vibrating electrode.

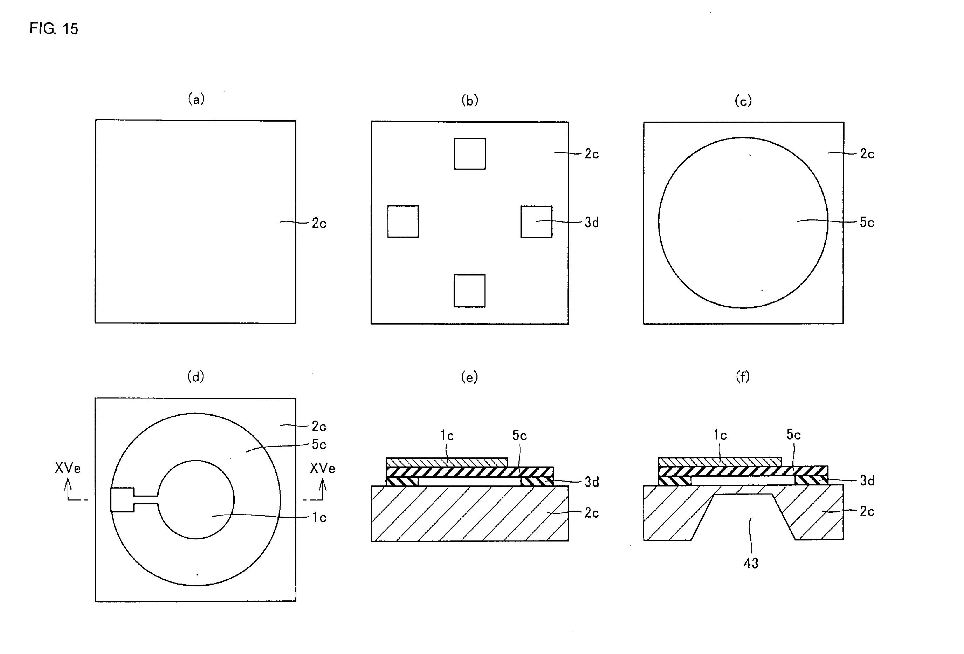

Fig. 15 (a) to Fig. 15 (d) are plan views to show relevant parts which constitute the capacity type sensor according to a tenth embodiment of the present invention and Fig. 15 (e) and Fig. 15 (f) are cross sectional views of the capacity type sensor when cut along the line XVe - XVe shown in Fig. 14 (d).

In this tenth embodiment, on the second electrode 2c which is the same as that shown in Fig. 14 (a), four insulating materials 3d shown in Fig. 15 (b) are formed along each edge of the second electrode 2c. A circular shape insulating material 5c shown in Fig. 15 (c) is formed to cover these insulating materials 3d. Further, a first electrode 1c shown in Fig. 15 (d) is formed on the insulating material 5c. Even in this embodiment, the insulating materials 3d shown in Fig. 15 (b) are configured to be outside of outer periphery of the first electrode 1c as is apparent by the cross sectional view shown in Fig. 15 (e), and the parasitic capacity on the insulating materials 3d do not affect the detected capacity at the first electrode 1c.

At this point as shown in Fig. 15 (f), the depression 43 may be formed at lower side of the second electrode 2c so as to make the first electrode 1c function as the fixed electrode and the second electrode 2c function as the vibrating electrode.

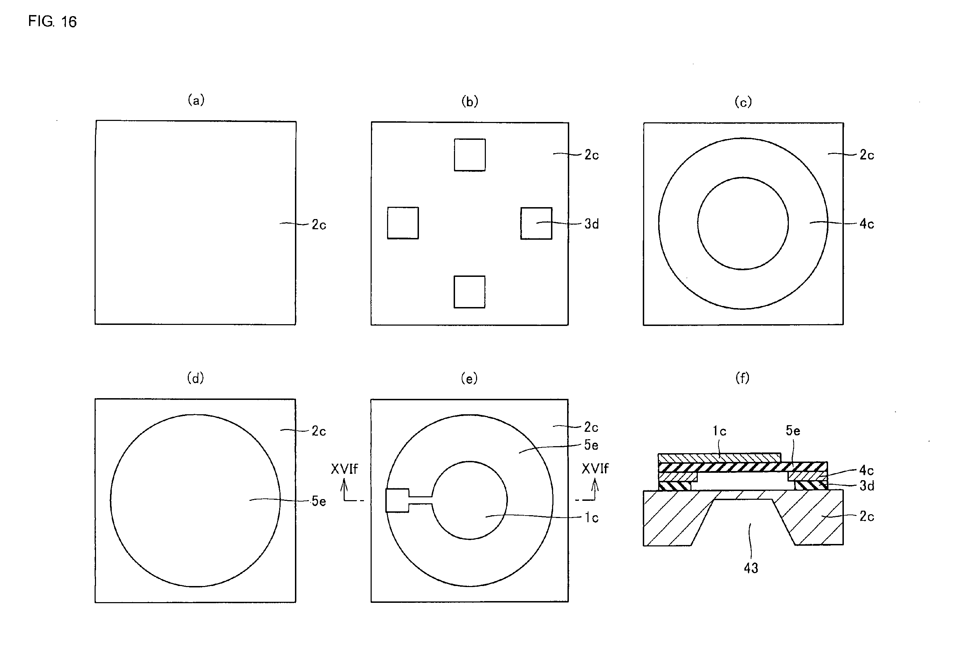

Fig. 16 (a) to Fig. 16 (e) are plan views to show relevant parts which constitute the capacity type sensor according to an eleventh embodiment of the present invention and Fig. 16 (f) is a cross sectional view of the capacity type sensor when cut along the line XVIf - XVIf shown in Fig. 16 (e).

In this eleventh embodiment, a guard electrode 4c shown in Fig. 16 (c) is formed between the insulating materials 3d shown in Fig. 16 (b) as fifth supporting members and an insulating material 5e shown in Fig. 16 (d) as an insulating member. This guard electrode 4c has the same function as the guard electrodes which are provided so as to reduce the parasitic capacity in the embodiments explained with reference to Fig. 1 to Fig. 10. Further by applying the electrical connections shown in Fig. 3 to Fig. 6, the sensitivity can be improved and at the same time the input conversion noise level can be reduced.

As a result, in this eleventh embodiment, the effect of the parasitic capacity caused by the insulating materials 3d can be reduced by making the potential difference between the guard electrode 4c and the first electrode 1c substantially zero, making an area of the first electrode 1c smaller than that of the second electrode 2c and providing the insulating materials 3d outside of outer periphery of the first electrode 1c.

At this point even in the embodiments shown in Fig. 11 to Fig. 14, the guard electrode 4c shown in Fig. 16 (c) may be also provided.

Also, though in the above described embodiments, either one of the first electrode 1 or the second electrode 2 is utilized as the vibrating electrode and another one is utilized as the fixed electrode, it should not be considered as the restricted example, and both electrodes may be utilized as the fixed electrodes or as the vibrating electrodes at the same time. In case both electrodes are utilized as the fixed electrodes, it can be applied, for example, as a sensor for humidity, gas flow or fluid flow.

Up to here, though the embodiments of the present invention have been explained with reference to the drawings, the present invention is not restricted only to the above illustrated embodiments. Various kinds of modifications and variations may be added to the illustrated embodiments within the same or equivalent scope of the present invention.

### INDUSTRIAL APPLICABILITY

The capacity type sensor in accordance with the present invention is utilized to detect pressure and the like in a state that the sensitivity can be improved and at the same time the input conversion noise level can be reduced.

## Claims

1. A capacity type sensor comprising:
a first electrode;
a second electrode which is disposed opposedly to said first electrode;
a guard electrode which is disposed opposedly to said first electrode;
a potential equalizing means to make the potential difference between said first electrode and said guard electrode close to zero; and
a capacity type sensor detecting means to detect impedance change between said first electrode and said second electrode.

2. The capacity type sensor according to claim 1, wherein said guard electrode is disposed between said first electrode and said second electrode.

3. The capacity type sensor according to claim 1 further comprising a first supporting member to fix said guard electrode and said first electrode.

4. The capacity type sensor according to claim 1 further comprising a second supporting member to fix said second electrode and said guard electrode.

5. The capacity type sensor according to claim 1 further comprising a substrate on which either one of said first electrode or said second electrode, and said guard electrode are formed, wherein said guard electrode is made out of semiconductor layer which has different conductivity type from said first electrode or said second electrode.

6. The capacity type sensor according to claim 1, wherein said first electrode or said second electrode includes a thin film portion which is constituted by a depression at the central part of lower side of said first or second electrode, and said thin film portion is a vibrating electrode.

7. The capacity type sensor according to claim 6, wherein said first electrode or said second electrode which is formed as the thin film portion is a vibrating electrode.

8. The capacity type sensor according to claim 1, wherein at least one of said first electrode and said second electrode is the vibrating electrode.

9. The capacity type sensor according to claim 1, wherein both of said first electrode and said second electrode are fixed electrodes.

10. A capacity type sensor comprising:
a first electrode and a second electrode which are opposedly disposed each other and an area of either one of said first and second electrode is made narrower than another; and
a supporting member which is disposed outside of outer periphery of one of said electrodes with a narrower area to support another one of said electrodes with a wider area.

11. The capacity type sensor according to claim 10 further comprising a substrate, wherein said supporting member supports said electrode with the wider area on said substrate.

12. The capacity type sensor according to claim 11, wherein either one of said first and second electrodes is disposed on said substrate, and a third supporting member is disposed between said substrate and another one of said electrodes which is not disposed on said substrate.

13. The capacity type sensor according to claim 12, wherein an opening portion is formed at the central part of said substrate, and said electrode formed on said third supporting member is the vibrating electrode.

14. The capacity type sensor according to claim 10, wherein either one of said first and second electrodes is disposed on another one of said first and second electrodes and,
said capacity type sensor further comprising a fourth supporting member which supports said another one of said electrodes on said one of said electrodes.

15. The capacity type sensor according to claim 14, wherein said electrode with the narrower area is disposed on said electrode with the wider area,
said capacity type sensor further comprising a fifth supporting member which is formed on said electrode with the wider area, and an insulating member which is supported by said fifth supporting member, wherein said electrode with the narrower area is disposed on said insulating member.

16. The capacity type sensor according to claim 15 further comprising:
a guard electrode which is disposed between said fifth supporting member and said insulating member;
a potential equalizing means to make the potential difference between said first electrode and said guard electrode close to zero; and
a capacity type sensor detecting means to detect impedance change between said first electrode and said second electrode.
